Europäisches Patentamt

European Patent Office

Office européen des brevets

(19)

(11) **EP 1 457 577 A1**

(12) **EUROPEAN PATENT APPLICATION**

(43) Date of publication:
**15.09.2004 Bulletin 2004/38**

(51) Int Cl.7: **C22B 7/00**, C22B 11/00,
C22B 15/00

(21) Application number: **04075791.6**

(22) Date of filing: **11.03.2004**

| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **12.03.2003 IT MI20030468**<br><br>(71) Applicant: **ENGITEC S.P.A.**<br>**I-20159 Milano (IT)** | (72) Inventors:<br>• **Olper, Marco**<br>**20052 Monza (Milan) (IT)**<br>• **Maccagni, Massimo**<br>**20099 Sesto San Giovanni (Milan) (IT)**<br>• **Cossali, Silvano**<br>**24028 Ponte Nossa (Bergamo) (IT)**<br><br>(74) Representative: **Coppo, Alessandro**<br>**Ing. Barzanò & Zanardo Milano S.p.A.,**<br>**Via Borgonuovo, 10**<br>**20121 Milano (IT)** |

(54) **Process for recovering metals, in particular precious metals, from electronic scrap**

(57)    The present invention relates to a process for recovering metals, in particular precious metals, from electronic scrap, comprising a leaching phase in which the electronic scrap is treated with a leaching solution based on cupric chloride and an alkaline chloride to dissolve the metals exposed to said solution, with the exception of gold, and a subsequent recovery phase of gold in solid form.

Fig.1

EP 1 457 577 A1

## Description

The present invention relates to a process for recovering metals, in particular precious metals, from electronic scrap.

In particular, the present invention relates to a suitable process for the recovery of precious metals such as Gold and Silver, and other metals such as Copper, Aluminum, Tin, Zinc, Nickel and Lead from electronic scrap, by effecting a separation of the components and gold in solid form.

The technical field of application of the present invention is the recycling of electronic scrap, in particular the recovery of the metals contained therein.

In the last few years, this field has become increasingly more important, due to the increase in volumes to be treated and the development of technologies which allow the recovery of both precious metals, such as, for example, gold, silver, and also of non-noble metals such as copper, aluminum, iron, nickel, lead, tin and zinc.

In current recovery techniques, the electronic scrap is ground until it reaches a size of a few millimeters and fractions rich in metals, among which mainly copper, are subsequently mechanically and magnetically separated.

The metallic fractions are mostly integrated in the productive cycle of copper, before the smelting of the anodes used subsequently for the electrolytic refining of this metal. Precious metals, among which mainly gold and silver, are then obtained from the anodic sludge, characteristic of this type of refining process, using well known processes.

A typical example of a refining process is provided by Rönnskär Smelter of Boliden.

In this context, the electronic scrap is fed into the oven Kaldo and the metal thus produced is added to the converter together with the copper coming from the smelter, and then enters the classical die for the production of copper. From the converter, it then passes to the anode oven where copper anodes are produced, which feed the electrolytic refining cell. Electrolytic copper cathodes are produced in this unit, whereas the precious metals are subsequently extracted from the anodic sludge produced (T. Lehner, J. Wiklund, "The New Rönnskär Smelter"; Proceeding of EMC 2001, Volume 1, September 18-21st, 2001; Friedrichschafen, Germany; Pages 49-59).

A part of the precious metals is also dispersed in the polymer-based fractions, as well as in the metallic fractions, and is therefore lost.

It should also be considered that, in thermal processes used for the production of copper anodes, the possible presence in the metallic fractions of polymeric material of the fireproof type, thus containing reasonable quantities of halogen elements, leads to the formation of dioxins (N. Menad, B. Björkman, S. Zhang and E. Forsberg, "Thermodynamic Conditions for the Formation of Dioxin during the Recycling of Non Ferrous Metals from Electric and Electronic Scrap"; Proceedings of EPD Congress 1998 Ed. B. Mishra; The Minerals and Materials Society; February 16-19th, 1998; San Antonio, Texas, U.S.A.; pages 657-673).

At present, with the recovery methods traditionally used, it is therefore indispensable to effect the grinding of electronic scrap in order to reduce it to extremely small sizes.

This operation has the disadvantage of being extremely costly and not very selective and necessitates separation systems downstream which at times become very difficult to handle.

The final result envisages the formation of metal-based and polymer-based fractions.

A serious drawback consists in the fact that in the metal-based fractions there can be polymeric parts, in some cases fireproof, which, in the case of a thermal process, as occurs in the production of copper anodes, can lead to the production of dioxins.

Grinding operations, on the other hand, are effected as current recovery systems do not allow an effective separation of the components.

Furthermore, the recovery of precious metals in the above systems is only partial as a part is lost during the separation of the metallic and polymeric fractions.

One of the objectives of the present invention is to effect a process for recovering metals, in particular precious metals, from electronic scrap which envisages a recovery selectivity of precious metals such as gold and silver.

Another objective of the present invention consists in effecting a process for recovering metals from electronic scrap which allows a simple but effective separation of the components.

Yet another objective is to provide a process for recovering metals, in particular precious metals, from electronic scrap, reducing the grinding operations and emission into the atmosphere of polluting or toxic substances to the minimum.

A further objective of the invention is to effect a process for recovering metals, in particular precious metals, from electronic scrap which is simple to effect and economically advantageous.

In the light of these objectives and others which will appear more evident hereunder, a process is provided, in accordance with a first aspect of the present invention, for recovering metals, in particular precious metals, from electronic scrap comprising the treatment of scrap, either whole or grossly ground, with an acid solution of cupric chloride and one or more alkaline chlorides, in accordance with claim 1 enclosed.

Further characteristics of the invention are illustrated in the subsequent claims.

In particular, the invention envisages the recovery of metals through the treatment of electronic scrap such as printed circuits having all the components and connectors still installed.

In accordance with an embodiment, the process of the invention comprises the leaching of metals on the part of solutions of cupric chloride.

It has been verified that solutions of cupric chloride, in the presence of an alkaline halide, in particular sodium and/or potassium chloride exert a complexing and consequently stabilizing action of the metallic species in solution, causing the dissolution of the metals contained in the scrap, except for gold. The reaction of interest is conveniently the following:

$$\text{Me} + \text{n CuCl}_2 \rightarrow \text{MeCl}_n + \text{n CuCl}$$

wherein Me comprises Fe, Zn, Pb, Ni, Co, Sn and other metals. Specifically, a mole of metal selected for example from Fe, Zn, Pb, Ni and Co, can react with n moles of cupric chloride $CuCl_2$, forming a mole of the relative metallic chloride and n moles of cuprous chloride CuCl.

A solution comprising alkaline halides according to the invention also allows other metals such as silver and copper to be brought into solution. Said solution based on alkaline halides proves to be particularly effective when it comprises at least one oxidant.

Although it is present in electronic scrap in lower quantities with respect to the other metals, gold represents the greatest value contained therein, due to its high price.

From analyses effected on electronic scrap, it has been verified that gold is present in the contacts, such as those relating to the printed circuits and connection plugs and in the chips. The gold fraction is generally equally subdivided among the contacts, about 50%, and chips for the remaining 50%.

Following the treatment of the electronic scraps with an acid solution of cupric chloride, in the presence of one or more alkaline chlorides, other metallic values are then extracted, which can be recovered through known processes, after which the solution is regenerated to then be recycled and re-used again in the dissolution unit of the metals, by means of simple oxidation in air.

According to an embodiment, a solution of cupric chloride is prepared, with one or more alkaline chlorides, having an acid pH, conveniently ranging from 0 to 3, preferably from 0.5 to 2, and having a varying content of cupric chloride ($CuCl_2$), within the range of 20 gr/l- 50 gr/l, preferably 35 g/l.

The complexing effect is reinforced by the presence of alkaline chlorides, such as NaCl and KCl in a relation of 100 g/l -250 g/l, preferably 150 g/l.

The electronic scrap, either whole or grossly ground, is then immersed into said acid solution of cupric chloride at a temperature ranging from 50°C to 105°C, preferably from 70 to 90°C for a time of 1-5 hours, preferably from 1 to 3 h, with the consequent attack and dissolution of the metallic parts exposed to the solution, mostly consisting of contacts not protected from polymeric painting. The result of this operation is that all the electronic components, normally protected from polymeric paint resistant to acid and oxidizing attack, are detached from the scrap, together with the recovery of the clean cards with the copper tracks protected by paint, the recovery of other plastic parts mainly relating to the connectors, and finally, the gold in the contacts in the form of flakes dispersed in a fine inert powder and the solution containing a mixture of metals among which the most important are copper, silver, tin and iron.

After sieving, a liquid part, containing a suspension of fine inert powder, is obtained, together with flakes of gold in the under-sieve and a solid part in the upper-sieve.

The liquid part is conveniently filtered, obtaining, with this simple operation, the separation of the gold powder, which represents about 50% of the gold contained in the scrap treated, together with a fine inert powder.

A fraction rich in plastic, i.e. the clean cards and other plastic parts, and various components, is advantageously obtained, on the other hand, by flotation from the solid part.

The chips containing the remaining quantity of gold, accompanied by further copper, can be recovered from the separation of the components, conveniently effected by means of magnetic systems and/or Eddy Currents and subsequently by means of a dimensional screening.

The separated chips are subsequently ground, not necessarily into a fine form, so as to be able to expose the metallic part contained therein, to allow the remaining quantity of gold present to be recovered by means of a further immersion in the solution of cupric chloride.

Possible parts which are extremely rich in copper, of the ground electronic components can also be introduced into the solution, to also enable the quantity of this metal contained therein to be recovered.

The remaining metals dissolved therein are precipitated from the filtered solution and subsequently extracted with traditional methods.

The solution is typically treated in a reactor in which, by means of an air bubbling system, the solution itself is oxidized to enable it to re-exert its leaching action and is then re-admitted to the dissolution unit.

The oxidation, which is preferably carried out at a temperature higher than room value, advantageously within the range of 70-90°C, more preferably at about 80°C, causes the precipitation of iron and tin, as oxides, which are recovered by filtration.

The water lost by evaporation is typically restored by the addition of boiling water. The precipitate obtained by filtering the solution is conveniently washed first with a diluted solution of chlorides and subsequently with hot water and is finally dried.

The washing liquids can then be collected in the final oxidized solution.

The characteristics and advantages of a process for recovering metals, in particular precious metals, from electronic scrap according to the present invention will appear more evident from the following illustrative but non-limiting description, referring to the schematic drawings enclosed in which:

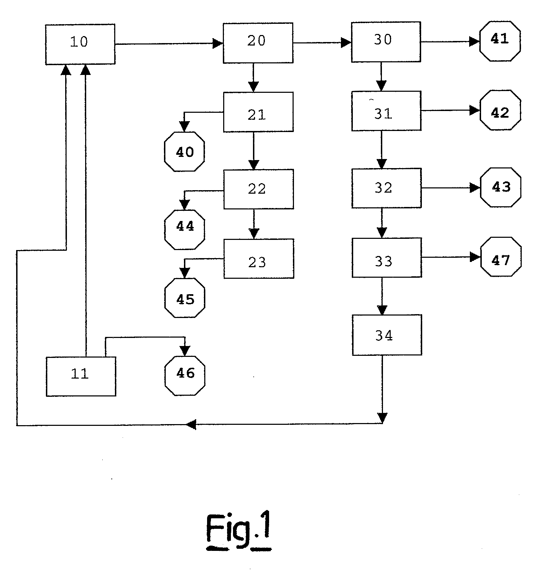

figure 1 shows a block scheme which illustrates an embodiment of the recovery process of metals of the invention.

With reference to figure 1, a block scheme is shown, which illustrates the main embodiment phases of a recovery process of metals from electronic scrap.

In particular, the dissolution unit 10 is defined, comprising an acid leaching solution of cupric chloride and alkaline chlorides, preferably NaCl, in which the electronic scrap, either whole or grossly ground, is immersed. The dissolution unit is connected to a sieving unit 20, in turn connected to the filtration unit 21, and separation unit by floatation 30, by means of connection devices. The filtration unit 21 is connected to a recovery unit of the silver 22 which, in turn, leads to a copper recovery unit 23, connected to the leaching regeneration unit 11 which is connected to the dissolution unit 10, by means of connection devices.

The figure also illustrates a separation unit by flotation 30 connected to the magnetic separation unit 31, in turn connected to the separation unit with eddy currents 32, connected in turn to the dimensional separation unit 33, which takes place with mechanical systems. The unit 33 is then connected to the grinding unit of the chips 34, in turn also connected to the dissolution unit 10.

The units described above are connected to each other by common connection devices such as, for example, conveyor belts, mobile connection units, ducts suitable for transferring chemical solutions and other means known to experts in the field.

According to an embodiment, the electronic scrap is fed to the leaching unit 10 which contains a leaching solution comprising cupric chloride and one or more alkaline chlorides dissolved.

At the end of the leaching phase, in which the metallic parts exposed are mainly treated, the leaching solution comprising cupric chloride and a metal chloride is transferred to the sieving unit 20 in which the leaching solution is separated together with a fine inert powder containing gold 40 which pass to the filtration unit 21, from the other solid parts which pass to the separation unit by flotation 30.

The fine inert powder containing gold 40 is advantageously separated in the filtration unit 21 from the leaching solution which then passes to the silver recovery unit 22. In this unit, the silver 44 is precipitated and recovered from the leaching solution which subsequently passes to the copper recovery unit 23. In this unit, as in the previous one, the copper is precipitated from the solution which is then brought to the regeneration unit of the leaching solution 11. In this unit, air is conveniently bubbled into the solution with the consequent formation of a precipitate 46, consisting in iron and tin oxide, which are recovered by filtration. The oxidized solution which is purified by filtration of the precipitate is again capable of exerting its leaching activity and is then re-admitted to the dissolution unit 10.

The plastic fractions 41, consisting of clean cards, connectors and other plastic parts are recovered in the separation unit by flotation 30, from the solid parts coming from the sieving unit 20. The remaining electronic components then pass to the magnetic separation unit 31, from which a fraction of electronic components rich in iron is recovered. The remaining components pass to the separation unit with eddy currents 32, from which a fraction rich in aluminum is obtained. Finally the remaining components are brought to the dimensional separation unit 33, where they are divided with mechanical systems. Non-useful fractions 47 and chips are thus obtained. These pass to the grinding unit 34, in which they are ground so as to expose the metallic parts contained therein and are subsequently sent to the dissolution unit 10 for the recovery of the remaining gold and copper fraction.

The following examples are provided for the solely illustrative purposes of the present invention and should in no way be considered as limiting its protection scope as defined in the enclosed claims.

**LEACHING EXAMPLE 1**

Preparation of the leaching solution

4 l of solution are prepared by mixing the following components:

- NaCl 600 g
- $CUCO_3$ 317 g
- HCl 36% 590 g
- Solution for the leaching of the transformers 11

The titration of 10 cc of this solution with $Na_2S_2O_3$ 0.1 N requires 8.9 cc (oxidants 0.89 N).

Leaching process

A sample is attacked with the solution prepared, which represents the average scrap sample, prepared according to the following formulation:

| | |
|---|---|
| Part of mixed contacts | 25.7 g |
| Smooth cards without components | 118.0 g |
| Cards with components | 166.8 g |
| Feeding of the test | 310.5 g |

The solution is brought to 75°C and the scrap is then added. At this point, the reactor is put under stirring. Samples are taken from the solution at intervals of 1 h to examine the content of oxidants. After 2 h the test is stopped and the liquid is separated from the solids to check the leaching effects. The solid part is hand sorted, a magnetic separation is effected and the following observations are made:

- Card part: all clean with copper tracks under the paint
- Magnetic part: no further leaching accepted
- Non-magnetic part: there is a piece of non-painted aluminum
- Gold contact part: which are not completely detached
- Fine part with gold threads.

The non-magnetic part (3) and that of the gold contacts (4) is reinserted for leaching using a faster stirrer as the cards which tend to block it have been removed. The leaching is restarted and is continued for a further 2 h after which the dispersion is passed over a 2 mm sieve, the > 2 mm part (the piece of aluminum is dissolved) is separated and filtered.
The following products are obtained:

- 4.00 l of filtrate (titration: $Na_2S_2O_3$ 0.23 eq/l - $KMnO_4$ 0.76 eq/l)
- 2.9 g of solid > 2 mm as such
- 2.05 g of dry solid < 2 mm (which is attacked in aqua regia)

The card section (1) amounts to 177.7 g of which 112.5 without components.
The non-magnetic section (3) > 2 mm consisted of :

- 9.2 g of chips
- 5.2 g of cylindrical condensers
- 3.6 g of various condensers
- 19.7 g of plastic (which is then attacked in aqua regia; it seems perfectly clean)
- 2.3 g of various material

The magnetic part (2) consisted of:

- 23.7 g of transformers
- 6.0 g of resistances
- 4.9 g of pieces which looked like small square condensers but which actually proved to be pseudo-transformers consisting of:

  - 1.7 g of iron 34.7%
  - 1.7 g of copper 34.7%
  - 0.8 g of plastic 16.3%

- 0.7 g of plastic with copper 14.3%


- small square condensers
- 1.1 g of chips
- 0.8 g of various material
- 9.7 g of slightly magnetic parallelepiped condensers


A small piece of these seemed golden and was put under leaching.

The non-magnetic part is crushed in a crusher until it has been reduced to dimensions of < 1 mm. The condensers are crushed but do not break. The same thing also occurs with the "soft plastics". All the rest tends to crumble.

The magnetic part is sieved on a sieve with rectangular mesh of 3-4 mm x 30-40 mm allowing the condensers, resistances and chips to pass and leaving the transformers and pseudo-transformers on the upper-sieve.

The under-sieve is then passed into the crusher (vise) and the following products are recovered from the separation:

- Magnetic part with copper and iron
- Magnetic and non-magnetic part with dimensions > 5 mm (plastic and condensers)
- Crumbled part with metals (chips, etc.) which amounts to 18.9 g (material lost during the operation in the crusher)

An attack in 1 l of solution previously used for other tests is effected on this latter fraction (titration: $Na_2S_2O_3$ 0.49 eq/l - $KMnO_4$ 0.43 eq/l).

After 1.5 h the reaction is terminated and the product is filtered. The filtration which was initially good, slowly deteriorates, becoming extremely poor. The following products however are recovered:

- 1.02 l of filtrate
- 15.8 g of dry residue which, as such, weighed 18.5 g (humidity 14.6%)


The residue is attacked with aqua regia for analytical purposes.

Analysis, balancing and calculations

Analysis of the solutions gave the following result:

| Analysis (solutions) | Ag (mg / l) | Au (mg / l) | Al (g / l) | Cu (g / l) | Fe (g / l) | Ni (mg / l) | Pb (g / l) | Sn (g / l) | Zn (g / l) |
|---|---|---|---|---|---|---|---|---|---|
| Initial solution (first part) 4.00 l | 10.0 | 0 | 0.0 | 57.0 | 0.119 | 0.045 | 0.0 | 0.0 | 0.095 |
| Final solution (first part) 4.00 l | 26.5 | 0 | 3.04 | 62.2 | 1.072 | 0.209 | 1.20 | 2.32 | 0.305 |
| Initial solution (second part) 1.00 l | 24.6 | 0 | 2.90 | 62.6 | 1.095 | 0.209 | 1.21 | 2.26 | 0.304 |
| Final solution (second part) 1.02 l | 83.0 | 0 | 2.98 | 58.2 | 2.176 | 0.282 | 1.22 | 2.13 | 0.307 |

| Quantity (solutions) | Ag (mg) | Au (mg) | Al (g) | Cu (g) | Fe (g) | Ni (g) | Pb (g) | Sn (g) | Zn (g) | Total (g) |
|---|---|---|---|---|---|---|---|---|---|---|
| Initial solution (first part) | 40 | 0 | 0 | 228 | 0.476 | 0.18 | 0 | 0 | 0.3784 | |
| Final solution (first part) | 106 | 0 | 12.152 | 248.8 | 4.288 | 0.836 | 4.8 | 9.284 | 1.2192 | 52.41 |
| Difference first part | 66 | 0 | 12.152 | 20.8 | 3.812 | 0.656 | 4.8 | 9.284 | 0.8408 | |
| Initial solution (second part) | 24.6 | 0 | 2.90 | 62.60 | 1.10 | 0.21 | 1.21 | 2.26 | 0.30 | |
| Final solution (second part) | 84.66 | 0 | 3.04 | 59.36 | 2.22 | 0.29 | 1.24 | 2.17 | 0.31 | -1.88 |
| Difference second part | 60.06 | 0 | 0.138 | -3.236 | 1.125 | 0.079 | 0.034 | -0.086 | 0.009 | |

| Analysis (solids) | Ag (g / t) | Au (g /t) | Al (%) | Cu (%) | Fe (%) | Ni (%) | Pb (%) | Sn (%) | Zn (%) |
|---|---|---|---|---|---|---|---|---|---|
| End resid. second leaching  2.05 g | 1100 | 2100 | n.a. | 14.05 | 1.30 | 0.77 | 0.51 | n.a. | 0.11 |
| Plastic (> 2 mm non magnetic) 19.7 g | 19 | 3 | n.a. | 2.30 | 0.006 | 0.06 | n.d. | n.a. | 0.12 |
| Last leaching residue  15.8 g | 70 | 450 | 0.37 | 1.45 | 0.51 | 0.08 | 0.13 | 0.81 | 0.012 |

**LEACHING EXAMPLE 2**

Preparation of the leaching solution

4 l of solution are adopted, already used in other tests and partially re-oxidized with air, to verify the possibility of operating with a recycled solution. The titration of 10 cc of this solution with $Na_2S_2O_3$ 0.1 N requires 7.1 cc (oxidants 0.71 N) with $KMnO_4$ 0.1 N requires 2.0 cc (reducing agents 0.20 N).

Preparation of the leaching solution

A sample is attacked with the solution prepared, where there are no empty cards because they do not give any indication. The sample was prepared according to the following formulation:

| | |
|---|---|
| Cards with gold contacts | 64.6 g |
| Cards with components | 217.5 g |
| Feeding of the test | 282.1 g |

Also in this case, the solution is brought to 75°C and the scrap is then added. At this point, the reactor is put under stirring. Samples are taken from the solution at intervals of 1 h to examine the content of oxidants. After 2.5 h the test is stopped and the liquid is separated from the solids to check the leaching effects. The solid part is hand sorted, a magnetic separation is effected and the following products are separated:

- 4.0 l of filtrate (titration: $Na_2S_2O_3$ 0.45 eq/l - $KMnO_4$ 0.48 eq/l)
- 2.0 g of dry residue which, as such, weighed 5.00 g (humidity 60.0%)
- 81.8 of cards (including 63.7 g of cards already removed)
- 34.8 g of plastic
- 101.7 g of magnetic material comprising:

  - 57.1 g of transformers
  - 29.5 g of bobbins
  - 9.2 g of condensers
  - 4.2 g of chips
  - 1.0 g of resistances
  - 0.7 g of various material

- 21.5 g of non-magnetic material comprising:

  - 8.1 g of chips
  - 3.8 g of cylindrical condensers
  - 4.3 g of various condensers
  - 5.3 g of various material

Analysis, balancing and calculations

Analysis of the solutions gave the following result:

| Analysis (solutions) | | Ag (mg / l) | Au (mg / l) | Al (g / l) | Cu (g / l) | Fe (g / l) | Ni (mg / l) | Pb (g / l) | Sn (g / l) | Zn (g / l) |
|---|---|---|---|---|---|---|---|---|---|---|
| Initial solution | 4.00 l | 27.0 | 0 | 0.303 | 55.0 | 1.53 | 0.647 | 0.62 | 0.73 | 0.872 |
| Final solution | 4.00 l | 50.5 | 0 | 0.45 | 57.1 | 2.85 | 1.105 | 2.22 | 3.73 | 0.959 |

| Quantity (solutions) | Ag (mg) | Au (mg) | Al (g) | Cu (g) | Fe (g) | Ni (g) | Pb (g) | Sn (g) | Zn (g) | Total (g) |
|---|---|---|---|---|---|---|---|---|---|---|
| Initial solution | 108 | 0 | 1.212 | 220 | 6.12 | 2.588 | 2.48 | 2.916 | 3.488 | |
| Final solution | 202 | 0 | 1.80 | 228.4 | 11.4 | 4.42 | 8.88 | 14.928 | 3.836 | 34.95 |
| Difference | 94 | 0 | 0.588 | 8.4 | 5.28 | 1.832 | 6.4 | 12.012 | 0.348 | |

| Analysis (solids) | | Ag (g / t) | Au (g / t) | Al (%) | Cu (%) | Fe (%) | Ni (%) | Pb (%) | Sn (%) | Zn (%) |
|---|---|---|---|---|---|---|---|---|---|---|
| Leaching final residue | 2 g | 2100 | 2010 | n.a. | 20.9 | 2.61 | 0.48 | 0.98 | n.a. | 0.35 |

9

**LEACHING EXAMPLE 3**

Preparation of the leaching solution

4 l of solution are prepared, having the following formulation:

- NaCl 800 g
- CUCO$_3$ 400 g
- HCl 36% 720 g

The titration of 10 cc of this solution with Na$_2$S$_2$O$_3$ 0.1 N requires 8.9 cc (oxidants 0.89 N).

Leaching process

A sample is prepared according to the following formulation:

| | |
|---|---|
| Cards with gold contacts | 33.0 g |
| Cards without gold contacts | 248.2 g |
| Feeding of the test | 281.2 g |

Also in this case, the solution is brought to 75°C and the scrap is then added. At this point, the reactor is put under stirring. Samples are taken from the solution at intervals of 1 h to examine the content of oxidants. After 2 h the test is stopped, the clean cards (now without any component) are removed together with the transformers (by magnetic separation), 426.7 g of other cards are added and the process is continued for a further 2.5 h. At the end of this period, the liquid is separated from the solids to check the leaching effects. The solid part is hand sorted, a further magnetic separation is effected and the following products are separated:

- 4.0 l of filtrate (titration: Na$_2$S$_2$O$_3$ 0.61 eq/l - KMnO$_4$ 0.36 eq/l)
- 2.0 g of dry residue
- 107.7 of cards (first phase)
- 408.7 of cards (second phase)
- 18.4 g of plastic (there is still metal which does not however seem to be gold. By attack with aqua regia it is demonstrated that all the gold was detached during the leaching with CuCl$_2$)
- 101.0 g of magnetic material comprising:

    - 51.5 g of transformers (6)
    - 39.3 g of bobbins (8)
    - 5.9 g of condensers
    - 3.0 g of chips
    - 1.3 g of resistances

- 17.1 g of non-magnetic material comprising:

    - 7.3 g of chips
    - 4.9 g of cylindrical condensers
    - 4.9 g of parallelepiped condensers

Analysis, balancing and calculations

Analysis of the solutions gave the following result:

EP 1 457 577 A1

| Analysis (solutions) | | Ag (mg / l) | Au (mg / l) | Al (g / l) | Cu (g / l) | Fe (g / l) | Ni (mg / l) | Pb (g / l) | Sn (g / l) | Zn (g / l) |
|---|---|---|---|---|---|---|---|---|---|---|
| Initial solution | 4.00 l | 10.0 | 0 | 0.000 | 54.9 | 0.00 | 0.000 | 0.00 | 0.00 | 0.000 |
| Final solution (first phase) | 4.00 l | 25.5 | 0 | 0.203 | 57.9 | 0.87 | 0.075 | 1.47 | 3.54 | 0.099 |
| Final solution | 4.00 l | 28.1 | 0 | 0.281 | 60.6 | 0.92 | 0.082 | 1.69 | 3.54 | 0.102 |

| Quantity (solutions) | Ag (mg) | Au (mg) | Al (g) | Cu (g) | Fe (g) | Ni (g) | Pb (g) | Sn (g) | Zn (g) | Total (g) |
|---|---|---|---|---|---|---|---|---|---|---|
| Initial solution | 40 | 0 | 0 | 219.6 | 0 | 0 | 0 | 0 | 0 | |
| Final solution (first phase) | 102 | 0 | 0.81 | 231.6 | 3.50 | 0.300 | 5.88 | 14.16 | 0.397 | 49.32 |
| Final solution | 112 | 0 | 1.12 | 242.4 | 3.67 | 0.328 | 6.76 | 14.16 | 0.406 | |
| Difference (final – initial) | 72.4 | 0 | 1.124 | 22.8 | 3.67 | 0.328 | 6.76 | 14.16 | 0.406 | |

| Analysis (solids) | | Ag (g / t) | Au (g / t) | Al (%) | Cu (%) | Fe (%) | Ni (%) | Pb (%) | Sn (%) | Zn (%) |
|---|---|---|---|---|---|---|---|---|---|---|
| Leaching end residue | 2 g | 2100 | 2010 | n.a. | 20.9 | 2.61 | 0.48 | 0.98 | n.a. | 0.35 |

**Claims**

1.  A process for the recovery of metals, in particular precious metals, from electronic scrap, **characterized in that** it comprises:

    -   a leaching phase in which said electronic scrap is put in contact with a leaching solution comprising cupric chloride and one or more alkaline halides suitable for complexing the metallic species in solution, to obtain the dissolution of the metals exposed to said solution, with the exception of gold,
    -   a recovery phase of the gold in solid form.

2.  The process according to claim 1, **characterized in that** said alkaline halides of the leaching solution are alkaline chlorides selected from the group comprising sodium chloride, potassium chloride, and mixtures thereof.

3.  The process according to claim 1 or 2, **characterized in that** said leaching phase is effected at a temperature ranging from 50 to 105°C.

4.  The process according to claim 3, **characterized in that** said leaching phase is effected at a temperature ranging from 70 to 90°C for a time of 1 h -3 h.

5.  The process according to any of the claims 1-4, **characterized in that** said leaching solution has a pH within the range of 0 to 3.

6.  The process according to any of the claims 1-5, **characterized in that** said leaching solution has a copper content ranging from 20 to 50 g/l.

7.  The process according to any of the claims 1-6, **characterized in that** before the recovery phase of the gold, a sieving phase is effected, in which the leaching solution with the gold residues is separated from the solid fractions.

8.  The process according to any of the claims 1-7, **characterized in that** said gold recovery phase is effected by means of filtration.

9.  The process according to any of the claims 1-8, **characterized in that** it comprises a further recovery phase of the silver from the leaching solution.

10. The process according to any of the claims 1-9, **characterized in that** it comprises a further recovery phase of the copper from the leaching solution.

11. The process according to claim 10, **characterized in that** the leaching solution, by air bubbling, produces a precipitate based on iron hydroxide and tin oxide, contemporaneously re-oxidizing the cuprous chloride to cupric chloride.

12. The process according to claim 11, **characterized in that** the solution is re-circulated to the leaching phase after recovering said precipitate by filtration.

13. The process according to any of the claims 1-12, **characterized in that** the solid fractions, recovered from the sieving phase are subjected to

    -   flotation to separate the cards and plastic material,
    -   magnetic separation to recover the fraction rich in iron of the components of the electronic circuits,
    -   separation with parasite currents to separate the fraction rich in aluminum.

14. The process according to claim 13, **characterized in that** the non-separated electronic components comprising the chips are ground and re-circulated to the leaching phase for the recovery of the remaining metal fractions.

Fig.1

**European Patent Office**

## EUROPEAN SEARCH REPORT

Application Number

EP 04 07 5791

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 668 289 A (SAUD ABEL ET AL) 26 May 1987 (1987-05-26) | 1-8,11, 12 | C22B7/00 C22B11/00 C22B15/00 |
| Y | * col.3, l.38-42; col.4, l.65 - col.5, l.3; col.5, l.64 - col.6, l.6; col.6, l.29-39; col.7, l.15-21; examples 1,3 and 4 * | 9,10,13, 14 | |
| Y | DD 253 048 A (FUNK A BERGBAU HUETTENKOMBINAT) 6 January 1988 (1988-01-06) * claim 1; page 2, end of third paragraph * | 9,10 | |
| Y | SUM E Y L: "THE RECOVERY OF METALS FROM ELECTRONIC SCRAP" JOM, MINERALS, METALS AND MATERIALS SOCIETY, WARRENDALE, US, vol. 43, no. 4, 1 April 1991 (1991-04-01), pages 53-61, XP000249799 ISSN: 1047-4838 * paragraph bridging pages 53 and 54 * | 13,14 | |
| Y | US 4 423 011 A (BAGLIN ELIZABETH G ET AL) 27 December 1983 (1983-12-27) * claim 1 * | 10 | TECHNICAL FIELDS SEARCHED (Int.Cl.7) C22B |

The present search report has been drawn up for all claims

| Place of search | Date of completion of the search | Examiner |
|---|---|---|
| MUNICH | 27 May 2004 | Bjoerk, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 04 07 5791

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2004

| Patent document cited in search report | | Publication date | Patent family member(s) | | Publication date |
|---|---|---|---|---|---|
| US 4668289 | A | 26-05-1987 | NONE | | |
| DD 253048 | A | 06-01-1988 | DD | 253048 A1 | 06-01-1988 |
| US 4423011 | A | 27-12-1983 | NONE | | |

EPO FORM P0459

For more details about this annex : see Official Journal of the European Patent Office, No. 12/82